**Europäisches Patentamt**

**European Patent Office**

**Office européen des brevets**

(19)

(11) Veröffentlichungsnummer : **0 088 298**
**B1**

# (12) EUROPÄISCHE PATENTSCHRIFT

(45) Veröffentlichungstag der Patentschrift :
**28.05.86**

(51) Int. Cl.⁴ : **A 61 C 17/02**

(21) Anmeldenummer : **83101820.5**

(22) Anmeldetag : **24.02.83**

(54) **Zahnärztliches Spritzhandstück.**

(30) Priorität : **10.03.82 DE 3208666**

(43) Veröffentlichungstag der Anmeldung :
**14.09.83 Patentblatt 83/37**

(45) Bekanntmachung des Hinweises auf die Patenterteilung : **28.05.86 Patentblatt 86/22**

(84) Benannte Vertragsstaaten :
**AT CH DE FR IT LI**

(56) Entgegenhaltungen :
**DE-A- 2 639 264**
**DE-U- 1 943 508**
**DE-U- 6 750 794**
**US-A- 1 556 181**
**US-A- 2 109 900**
**US-A- 2 522 261**
**US-A- 4 149 315**

(73) Patentinhaber : **Siemens Aktiengesellschaft**
**Berlin und München Wittelsbacherplatz 2**
**D-8000 München 2 (DE)**

(72) Erfinder : **Schuss, Werner**
**In der Lahrbach 18**
**D-6148 Heppenheim (DE)**
Erfinder : **Weber, Walter**
**Goldregenstrasse 2**
**D-6143 Lorsch (DE)**

## Beschreibung

Die Erfindung bezieht sich auf ein zahnärztliches Spritzhandstück mit einem in einer zur Spritzdüse führenden Medienleitung angeordneten, und mittels einer Handhabe betätigbaren Ventil zur Steuerung des Medienflusses, welches Ventil im Wesentlichen durch einen Schlauchabschnitt aus elastischem Material und einem auf diesen wirkenden Druckstempel gebildet ist, der in Ruhestellung des Ventils mittels Kipphebel und unter Wirkung einer oder mehrerer Federn gegen den Schlauchabschnitt anliegt und diesen so zusammendrückt, daß ein Strömungsfluß des Mediums durch den Schlauchabschnitt an der Quetschstelle unterbrochen ist und der bei Betätigung der Handhabe die Schlauchquetschung wenigstens so weit aufhebt, daß ein Strömungsfluß gegeben ist, sowie mit einer mit der Handhabe gekuppelten, in Flußrichtung gesehen, vor dem Ventil angeordneten Rücksaugeinrichtung, welche nach Schließen des Ventils ein Rücksaugen wenigstens eines Teiles des Mediums, welches in der Leitung — in Flußrichtung gesehen — vor dem Ventil liegt, bewirkt.

Bei einem bekannten solchen Spritzhandstück (DE-A-26 39 264) ist der Schlauch mittels aus Hilfshebel und Betätigungshebel bestehender Kipphebelmechanik im Sinne einer Dosierung des Medienflusses verformbar. Hilfshebel und Betätigungshebel sind durch eine gemeinsame Achse schwenkbar im Innern des Gehäuses des Spritzhandstükkes gehalten, wobei der Hilfshebel als einseitiger Hebel ausgebildet ist, dessen abgewinkeltes Ende als Druckstempel wirkt, der in der Ruhestellung des Ventils unter Wirkung einer Feder gegen den Schlauch anliegt und diesen so zusammendrückt, daß ein Strömungsfluß des Mediums durch den Schlauch an der Quetschstelle unterbrochen ist, dagegen bei Betätigung des anderen Hebels die Quetschung aufhebt und so den Strömungsfluß freigibt.

Der quetschbare elastische Schlauch ist mit einer Rücksaugeinrichtung verbunden, die dort aus einer Kammer mit einem in der Kammer verschiebbar angeordneten Kolben besteht. Bei Unterbrechung des Mediumflusses wird das im Austrittskanal der Spritzdüse liegende Medium zumindest teilweise in das Handstück zurückgesaugt, wodurch ein nachträgliches unerwünschtes Tropfen des Handstückes vermieden werden soll.

Die bei diesem bekannten Spritzhandstück konstruktiv nicht näher dargestellte, aber im einfachsten Falle als Zylinder-Kolben-Anordnung angegebene Rücksaugeinrichtung erlaubt, da diese konstruktiv völlig anders aufgebaut ist als das Ventil, keinen einfachen Gesamtaufbau von Ventil und Rücksaugeinrichtung. Darüber hinaus ist die Übertragung der Hubbewegung von der gemeinsamen (daumenbetätigbaren) Handhabe auf die Betätigungselemente einerseits für die Schlauchquetschung und andererseits für die Betätigung des Kolbens insofern problematisch, weil die Handhabe eine Kippbewegung ausführt, der Kolben sich dagegen nur annähernd rechtwinkelig dazu bewegt und hierzu eine exakte, gut geführte Axialführung erfordert. Der Kolben selbst muß wiederum, um den erwünschten Rücksaugeffekt zu erzielen, in der Kammer ausreichend dichtend geführt sein.

Aus der US-PS-41 49 315 ist ein weiteres Spritzhandstück bekannt, bei dem Ventil und Rücksaugeinrichtung in Form eines federbelasteten, durch die Handhabe betätigbaren Kolbens im Handstück angeordnet sind. Wegen der Kleinheit der Teile, der engen Toleranzen, ist eine solche Konstruktion relativ kompliziert und aufwendig. Außerdem neigt eine solche Einrichtung bei Schmutzansammlung bzw. bei einem Verschleiß der Kolbendichtringe zu Undichtigkeiten und zu einem in der zahnärztlichen Präparationstechnik unerwünschten Nachtropfen des Mediums an der Austrittsstelle.

Aus der DE-U-67 50 794 ist ein Spritzhandstück bekannt, bei dem die Rücksaugeinrichtung als Membranpumpe ausgebildet ist. Die Steuerung des Medienflusses erfolgt über getrennt angeordnete, mit der Handhabe für die Rücksaugeinrichtung betätigbare Ventile.

Aus der US-PS-15 56 181 ist ein Spritzhandstück bekannt, bei dem zur Steuerung des Medienflusses im Handstück ebenfalls ein mittels Kipphebelmechanik quetschbarer Schlauch vorgesehen ist. Bei nicht gedrückter Handhabe drückt eine Feder einen Kipphebel mit einem Druckglied derart gegen den Schlauch, daß dieser so weit abgequetscht wird, daß ein Medienfluß unterbunden wird. Bei diesem Handstück ist keine Rücksaugeinrichtung vorhanden, so daß nach dem Schließen des Ventils das Spritzmedium (Wasser) nachtropfen kann. Dieses Nachtropfen wird durch das Abquetschen des Schlauches sogar begünstigt, da durch den Quetschvorgang das Wasser verdrängt, das zwischen Ventil und Düse befindliche Wasser somit zur Düsenaustrittsstelle gedrückt wird.

Aufgabe der vorliegenden Erfindung ist es, ein Spritzhandstück der eingangs genannten Art dahingehend zu verbessern, daß gegenüber dem Stand der Technik ein einfacherer Gesamtaufbau von Ventil- und Rücksaugeinrichtung erzielt wird, der keine aufwendigen, präzis zu fertigenden und engen Führungstoleranzen unterliegende Bauteile erfordert, mit dem dennoch aber ein Nachtropfen an der Düse wirksam vermieden wird.

Zur Lösung der gestellten Aufgabe wird gemäß der Erfindung vorgeschlagen, daß die Rücksaugeinrichtung einen weiteren Schlauchabschnitt aus elastischem Material, dessen Querschnitt größer ist als der der Nenndurchflußmenge am Ventil entsprechende Querschnitt, und ein diesem weiteren Schlauchabschnitt zugeordnetes, mit der Handhabe gekuppeltes Druckstück enthält, mit dem bei Betätigung der Handhabe der Schlauch teilweise, jedoch nur bis zu dem der Nenndurchflußmenge am Ventil entsprechenden Querschnitt verformbar ist.

Vorteilhafte Ausgestaltungen und Weiterbildungen der Erfindung sind in abhängigen Patentansprüchen enthalten.

Die gemäß der Erfindung vorgeschlagene Rücksaugeinrichtung läßt sich mit der an sich bekannten Ventilanordnung mit Schlauchquetschung kombinieren, so daß sowohl die Durchflußmengensteuerung als auch die Rücksaugung des Mediums durch einen gemeinsamen Schlauch und durch einen gemeinsamen, die Handhabe betätigbaren Kipphebel, vorgenommen werden kann.

Ein Ausführungsbeispiel der Erfindung wird nachstehend anhand der Zeichnung näher erläutert. Es zeigen :

Figur 1 ein zahnärztliches Spritzhandstück der erfindungsgemäßen Art in vereinfachter Darstellung, teilweise im Längsschnitt,

Figur 2 einen Querschnitt entlang der Linie II-II in Fig. 1,

Figur 3 einen Querschnitt entlang der Linie III-III in Fig. 1,

Figur 4 Einzelheiten einer anderen Ausführungsform eines zahnärztlichen Spritzhandstückes in einer schaubildlichen Darstellung,

Figur 5 eine Halterung zur Aufnahme zweier Heizpatronen,

Figur 6 eine Heizpatrone in schaubildlicher Darstellung.

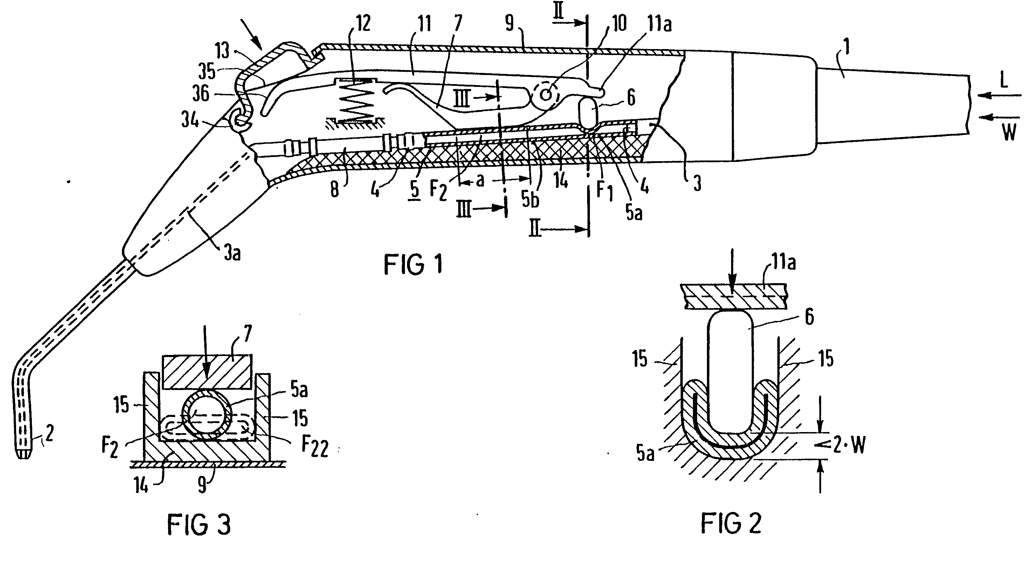

Die Fig. 1 zeigt in einer Seitenansicht mit teilweise aufgeschnittenem Gehäuse ein zahnärztliches Spritzhandstück, dem über Leitungen an ein Schlauchanschlußteil 1 zwei Medien (Luft und Wasser) zugeführt werden. Die beiden Medien werden bis zu einer Düse 2 geführt, wo sie dann entweder getrennt oder als Wasser-/Luftgemisch (Spray) austreten. Die Steuerung des Durchflusses der Medien erfolgt über ein für jedes Medium im Handstück angeordnetes Ventil, welches von außen betätigt wird. Im folgenden wird nur auf ein Medium (Wasser) bezug genommen. Der Medienverlauf sowie die Ventilsteuerung und gegebenenfalls Rücksaugung erfolgt für das zweite Medium in gleicher Weise, wobei bei Luft in der Regel auf eine Rücksaugung verzichtet werden kann.

Die vom Anschlußteil 1 zur Spritzdüse 2 führende Medienleitung 3 enthält einen zwischen zwei Anschlußnippel 4 angeordneten Schlauch 5, dessen mit 5a bezeichneter Abschnitt zusammen mit einem Druckstempel 6 ein Ventil und dessen mit 5b bezeichneter Abschnitt zusammen mit einem Druckstück 7 eine Rücksaugeinrichtung bilden. Mit 8 ist eine später noch näher erläuterte, bei Spritzhandstücken üblicherweise vorgesehene elektrische Heizvorrichtung bezeichnet, mit der das durchfließende Medium auf Körpertemperatur erwärmt werden kann.

Im Handstückgehäuse 9 ist mittels einer Achslagerung 10 ein Kipphebel 11 gelagert, der von einer Druckfeder 12 belastet an einer Handhabe 13 (Taste) anliegt. Der Kipphebel 11 enthält einen Fortsatz 11a, an dem der außen auf den Schlauchabschnitt 5a wirkende Druckstempel 6 anliegt. Der Schlauch 5 hat runden Querschnitt, (Fig. 3) besteht aus elastischem Material (z. B. aus Silikon) und liegt auf einer festen Unterlage 14 auf. Das Druckstück 7, welches ebenfalls mittels der Achslagerung 10 kippbar gelagert ist, liegt in der gezeichneten, nichtgedrückten Stellung über einen Längenabschnitt a mit leichtem Druck am Schlauchabschnitt 5b auf. In dieser nichtgedrückten Stellung quetscht der Druckstempel 6 den Schlauch auf etwas weniger als das doppelte seiner Wandstärke (W) zusammen ; der Druckstempel 6 drückt deshalb mit einem gewissen Überhub den Schlauch 5 zusammen. Der wirksame Durchflußquerschnitt ist hier Null.

In Fig. 2 ist diese geschlossene Ventilstellung im Querschnitt dargestellt. Aus der Darstellung geht hervor, daß der Schlauch 5 durch seitliche Wandungen 15 begrenzt ist, also in einem « Kanal » geführt ist.

Zur Erläuterung der Funktionsweise sei der Querschnitt des durch den Druckstempel 6 und dem Schlauchabschnitt 5a gebildeten Ventils mit $F_1$ und der Querschnitt des durch das Druckstück 7 belastbaren Schlauchabschnittes 5b im Bereich des Längenabschnittes a mit $F_2$ bezeichnet. Im gezeichneten Ruhezustand, also bei nichtgedrückter Taste 13, ist das Ventil 5a, 6 geschlossen, der wirksame Querschnitt $F_1$ demnach gleich Null. Der Querschnitt $F_2$ entspricht bei einem bestimmten Druck einer Durchflußmenge von etwa 2 l pro Minute ; im Vergleich zur Nenndurchflußmenge von 200 ml/min bei voll geöffnetem Ventil und gleichem Druck ist also der Querschnitt $F_2$ sehr viel größer als $F_1$ maximal.

Wird nun die Taste 13 in Richtung des Pfeiles gedrückt, wird über die Kipphebelmechanik 7, 11 der Schlauch im Abschnitt 5a von der ursprünglichen Schließstellung, in der der Druckstempel 6 den Schlauch auf ein Maß kleiner als die doppelte Wandstärke (2.W) zusammendrückt, zunächst bis auf die doppelte Wandstärke (2.W) des Schlauches entlastet. In dieser Stellung ist der Durchfluß nach wie vor Null. Die aber bereits eingeleitete Kippbewegung führt zu einer leichten Quetschung des Schlauchabschnittes 5b im Bereich des Längenabschnittes a durch das Druckstück 7. Der Querschnitt $F_2$ des Schlauches wird dabei verkleinert. Diese Verkleinerung bewirkt ein Nachvorneschieben des im Leitungsabschnitt 3a zwischen dem noch geschlossenen Ventil und der Spritzdüse 2 befindlichen Mediums an die Austrittsstelle der Düse.

Bei weiterem Drücken der Taste 13 wird schließlich das Ventil geöffnet, wodurch ein Durchfluß des Mediums bis zur maximalen Nenndurchflußmenge von beispielsweise 200 ml pro Minute erzielt werden kann. Während der Entlastung des Druckstempels 6 und des damit verbundenen Öffnens des Ventils wird gleichzeitig über das Druckstück 7 der Schlauchabschnitt 5b im Längenabschnitt a weiter verformt (siehe gestrichelte Darstellung in Fig. 3). Der Querschnitt — gleicher Umfang vorausgesetzt — verkleinert sich dabei weiter auf $F_{22}$. Dieser Querschnitt $F_{22}$ ist immer noch sehr viel größer als der maximale Nenndurchflußquerschnitt bei geöffnetem Ventil.

Wird nun das Ventil durch Loslassen der Taste 13 geschlossen, so wird zunächst der Durchflußquerschnitt $F_1$ bis auf Null reduziert. Infolge der Kupplung des Druckstückes 7 mit dem Kipphebel 11 wird der Querschnitt zunächst auf ein zwischen $F_{22}$ und $F_2$ liegendes Maß vergrößert. Diese Vergrößerung bedeutet eine Druckentspannung im Schlauchabschnitt 5b und im Leitungsbereich 3a und damit ein Abreißen der Wassersäule an der Düsenöffnung. Die weitere Entspannung des Schlauches im letzten Verstellweg, in der der Druckstempel 6 von der Schließstellung in die Schließstellung mit Überhub (Quetschung des Schlauches auf ein Maß kleiner als doppelte Wandstärke) übergeht, wird der Querschnitt schließlich wieder bis auf $F_2$ vergrößert. Durch die damit verbundene Volumenvergrößerung wird die zwischen Ventil und Düsenaustritt befindliche Wasserstange im Leitungsabschnitt 3a weiter zurückgesaugt.

Aus dem Vorgenannten ist zu entnehmen, daß der vorgesehene Überhub als Leerhub für die Rücksaugung vorgesehen ist, wodurch eine optimale Rücksaugung nach Abschalten der Medienzufuhr gewährleistet und ein Tropfen ausgeschlossen ist. Es ist weiter ersichtlich, daß sowohl das Ventil als auch die Rücksaugeinrichtung äußerst einfach aufgebaut sind. Die Verwendung eines an sich relativ weichen Silikonschlauches hat den Vorteil, daß evtl. im Wasser befindliche Schwebekörper beim Zusammendrücken des Schlauches durch den Druckstempel vom Schlauchmaterial aufgenommen werden, wodurch Undichtigkeiten weitgehend ausgeschlossen sind.

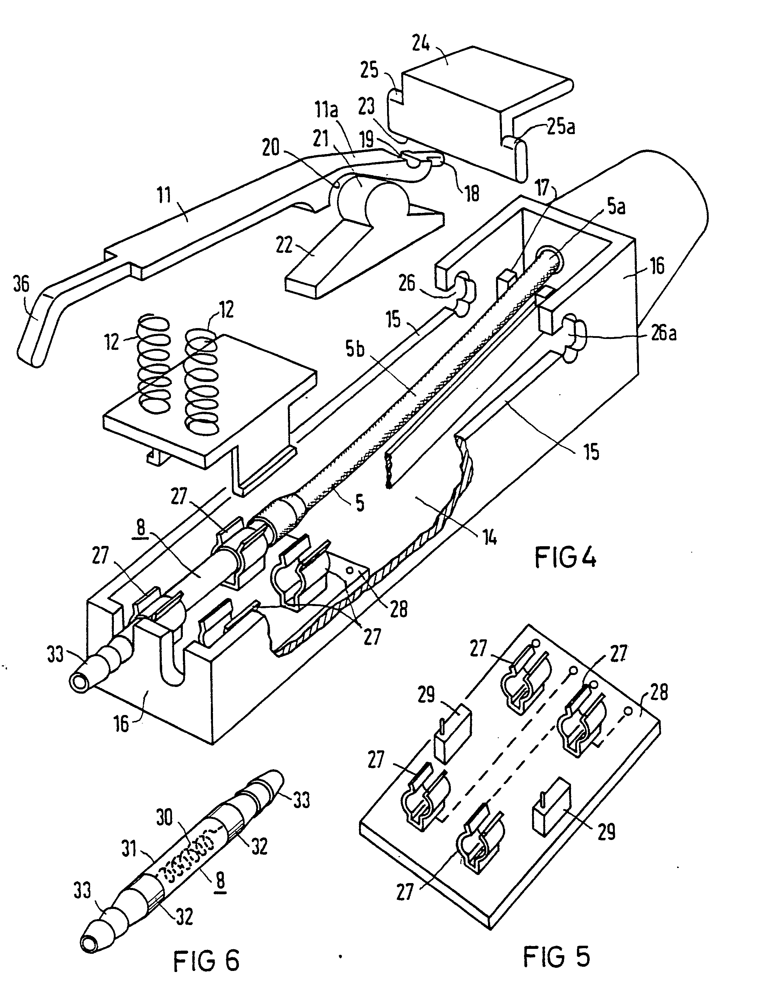

Die Fig. 4 zeigt eine modifizierte Ausführung der Ventil- und Rücksaugeinrichtung, wobei auch hier der Übersichtlichkeit wegen die für die Funktion wesentlichen Teile nur für ein Medium gezeichnet sind.

Aus der Darstellung ist ersichtlich, daß der Schlauch 5 zwischen Wandungen 15 eines Ventilkörpers 16 angeordnet ist. Im Bereich des Schlauchabschnittes $5_a$ ist ein Widerlager 17 vorhanden, gegen das sich der Schlauch beim Abquetschen abstützt. Der Kipphebel 11 enthält an seinem hinteren Ende einen Fortsatz 11a mit einem Druckstempel 18 sowie zwei Lagerausbuchtungen 19, 20. Die Ausbuchtung 20 bildet zusammen mit einer dazu passenden Wölbung 21 am Druckstück 22 eine nach unten offene Gleitlagerung (Pfannenlager) ; die Ausbuchtung 19 greift im montierten Zustand unter die Unterseite 23 eines winkelförmigen Kniehebels 24, der mittels seitlicher Ansätze 25, 25a in entsprechend ausgebildete Ausnehmungen 26, 26a am Ventilkörper 16 eingeschnappt wird. Die Ausbuchtung 19 und die dazu passende Unterseite 23 des Kniehebels 24 bilden zusammen die Kipplagerstelle, um die der Kipphebel 11 bei Betätigung kippt.

Die im vorderen Teil des Ventilkörpers 16 angeordnete und nachfolgend noch näher erläuterte Heizpatrone 8 ist in federnden Klammern 27 gehalten, wodurch ein Auswechseln ohne Zuhilfenahme von Werkzeugen leicht möglich ist.

Aus Fig. 5 geht hervor, daß die (für 2 Heizpatronen vorgesehene) vier Klammern 27 auf einer Abschlußplatte 28 befestigt sind, die im montierten Zustand im Ventilgehäuse 16 in geeigneter Weise gehaltert ist. Die Abschlußplatte 28 ist vorteilhafterweise als Leiterplatte ausgebildet, d. h. sie enthält die zur elektrischen Zuführung und gegebenenfalls Leistungssteuerung der Heizelemente in den Heizpatronen erforderliche Verdrahtung und gegebenenfalls weitere Bauelemente, so z. B. die beiden Mikroschalter 29, in der gezeigten Ausführung.

Die Heizpatrone 8 (Fig. 6) enthält in bekannter Weise ein eine Heizwendel 30 aufnehmendes und den Durchfluß des Mediums gewährleistendes Isolierrohr 31. Entsprechend einer besonderen Ausgestaltung enthält die Heizpatrone an ihren beiden Enden mit den Enden der Heizwendel 30 verbundene, aus elektrisch leitendem Material bestehende Kontaktierungselemente 32 sowie Anschlußelemente 33 für den direkten Anschluß der Medienzu- und -ableitung. Die Teile 32, 33 sind zweckmäßigerweise einstückig ausgebildet und fester Bestandteil der Heizpatrone. Hinsichtlich der Ventilsteuerung sei noch folgendes hervorgehoben :

Die in einer einseitig offenen Pfannenlagerung 34 (Fig. 1) kippbar gelagerte Handhabe 13 enthält eine Auflauffläche 35, auf der die obere Fläche 36 des Kipphebels 11 mittels Federdruck anliegt. Bei Betätigung der Handhabe 13 und der damit eingeleiteten Kippbewegung um die Lagerung 34 wickelt sich die Fläche 35 auf der Fläche 36 ab, d. h. der Berührungspunkt von Handhabe 13 und Kipphebel 11 verschiebt sich. Durch die Formgebung der miteinander korrespondierenden Flächen 35 und 36 wird eine über den Verstellweg sich ändernde Übersetzung der Ventilbetätigung erreicht, und zwar dergestalt, daß bei gleichmäßiger Betätigung der Handhabe 13 der Hub des Druckstempels 6 von einem kleineren auf einen größeren Wert ansteigt. Für den Betätiger wird damit der Vorteil erzielt, daß die Medienregulierung zu Beginn des Drückens feiner dosierbar ist als am Ende des Hubs. Dieser Vorteil ist selbstverständlich auch mit der in Fig. 4 gezeigten Anordnung gegeben.

## Patentansprüche

1. Zahnärztliches Spritzhandstück mit einem in einer zur Spritzdüse (2) führenden Medienleitung (3) angeordneten und mittels einer Handhabe (13) betätigbaren Ventil (5a, 6, 18) zur Steuerung des Medienflusses, welches Ventil im wesentlichen durch einen Schlauchabschnitt (5a) aus elastischem Material und einem auf diesen wirkenden Druckstempel (6, 18) gebildet ist, der in Ruhestellung des Ventils mittels Kipphebel (11) und unter Wirkung einer oder mehrerer Federn (12) gegen den Schlauchabschnitt anliegt und diesen so zusammendrückt, daß ein Strömungsfluß des Mediums durch den Schlauchabschnitt an der Quetschstelle unterbrochen ist und der bei Betätigung der Handhabe (13) die Schlauchquetschung wenigstens so weit aufhebt, daß ein Strömungsfluß gegeben ist, sowie mit einer mit der Handhabe (13) gekuppelten, in Flußrichtung gesehen vor dem Ventil (5a, 6, 18) angeordneten Rücksaugeinrichtung (5b, 7, 22), welche nach Schließen des Ventils ein Rücksaugen wenigstens eines Teiles des Mediums, welches in der Leitung — in Flußrichtung gesehen — vor dem Ventil liegt, bewirkt, dadurch gekennzeichnet, daß die Rücksaugeinrichtung einen weiteren Schlauchabschnitt (5b) aus elastischem Material, dessen Querschnitt ($F_2$) größer ist als der der Nenndurchflußmenge am Ventil (5a, 6, 18) entsprechende Querschnitt ($F_1$), und ein diesem weiteren Schlauchabschnitt (5b) zugeordnetes, mit der Handhabe (13) gekuppeltes Druckstück (7, 22) enthält, mit dem bei Betätigung der Handhabe (13) der weitere Schlauchabschnitt (5b) teilweise, jedoch nur bis zu dem der Nenndurchflußmenge am Ventil entsprechenden Querschnitt ($F_1$) verformbar ist.

2. Zahnärztliches Spritzhandstück nach Anspruch 1, dadurch gekennzeichnet, daß für Ventil (5a, 6, 18) und Rücksaugeinrichtung (5b, 7, 22) ein gemeinsamer Schlauch (5) vorgesehen ist.

3. Zahnärztliches Spritzhandstück nach Anspruch 2, dadurch gekennzeichnet, daß mit der Handhabe (13) der federbelasteter Kipphebel (11) gekuppelt ist, der einerseits über einen Druckstempel (6, 18) des Ventils bei nichtgedrückter Handhabe den Schlauch (5a) im Sinne einer Sperrung des Medienflusses abquetscht und andererseits bei gedrückter Handhabe das Druckstück (7, 22) im Sinne einer Verringerung des Volumens des Schlauchabschnittes (5b) auf den Schlauch drückt, und daß Kipphebel (11) und Handhabe (13) mit einerseits dem Druckstück (7, 22) und andererseits dem Druckstempel (6, 18) so gekuppelt sind, daß bei nichtbetätigter Handhabe (13) der Druckstempel (6, 18) den Schlauch mit Überhub auf ein Maß kleiner Wandstärke zusammenpreßt, daß diese Schlauchquetschung innerhalb eines ersten Verstellweges bis auf ein der doppelten Wandstärke entsprechendes Maß aufgehoben wird, daß innerhalb dieses Verstellweges der Schlauchquerschnitt des Schlauchabschnittes (5b) vor dem Ventil soweit verkleinert wird, daß das in diesem Abschnitt befindliche Medium zur Spritzdüse (2) gedrückt wird, und daß bei weiterer Verstellung der Handhabe (13) der Querschnitt dieses Schlauchabschnittes (5b) noch weiter, jedoch nur bis zu dem der Nenndurchflußmenge entsprechenden Querschnitt ($F_{22}$) verkleinert wird.

4. Zahnärztliches Spritzhandstück nach Anspruch 3, dadurch gekennzeichnet, daß der Kipphebel (11) einen den Druckstempel (18) enthaltenden Fortsatz (11a) aufweist.

5. Zahnärztliches Spritzhandstück nach einem der Ansprüche 1-4, dadurch gekennzeichnet, daß das Druckstück (22) mittels einer offenen Pfannenlagerung (20, 21) mit dem Kipphebel (11) gekuppelt ist.

6. Zahnärztliches Spritzhandstück nach einem der Ansprüche 1-5, dadurch gekennzeichnet, daß die Lagerung des Kipphebels (11) über einen im Ventilkörper (16) rastbaren Kniehebel (24) erfolgt.

7. Zahnärztliches Spritzhandstück nach einem der Ansprüche 1-6, dadurch gekennzeichnet, daß zur Steuerung von zwei Medien zwei nebeneinander liegende Kipphebel (11) und ein gemeinsamer Kniehebel (24) vorgesehen sind.

8. Zahnärztliches Spritzhandstück nach Anspruch 7, dadurch gekennzeichnet, daß die Schläuche (5) für die beiden Medien (L, W) in jeweils eine durch Wandungen (15) begrenzten Führungskanal des Ventilkörpers (16) eingelegt und geführt sind.

9. Zahnärztliches Spritzhandstück nach einem der Ansprüche 1-8, dadurch gekennzeichnet, daß durch die Formgebung von miteinander korrespondierenden Flächen (35, 36) von Handhabe (13) und Kipphebel (11) eine über den Verstellweg sich ändernde Übersetzung der Ventilbetätigung erreicht wird, dergestalt, daß bei gleichmäßiger Betätigung der Handhabe (13) der Hub des Druckstempels (6, 18) von einem kleinen auf einen größeren Wert ansteigt.

10. Zahnärztliches Spritzhandstück nach einem der Ansprüche 1-9, dadurch gekennzeichnet, daß der gemeinsame Schlauch (5) an seinem der Spritzdüse (2) zugewandten Ende direkt mit einer Heizpatrone (8) verbunden ist.

11. Zahnärztliches Spritzhandstück nach Anspruch 12, dadurch gekennzeichnet, daß die Heizpatrone (8) Anschluß- und Kontaktierungselemente (32, 33) für den direkten Anschluß der Medienzu- und -ableitung und den elektrischen Anschluß enthält.

**Claims**

1. A dental spray handpiece, with a valve (5a, 6, 18) in a media pipeline (3) leading to the spray nozzle (2), which can be actuated by means of a handle (13), and which serves to control the media flow, the valve fundamentally comprising a pipe section (5a) consisting of elastic material and a plunger (6, 18) arranged to act on said pipe section and which, in the rest position of the valve, abuts against the pipe section by means of rockers (11) and, under the influence of one or more than one spring (12), compresses the pipe section in such manner that a flow of the medium through the pipe section is interrupted at the compression point and which, when the handle (13) is actuated, discontinues the compression of the pipe at least to the extent that a flow occurs, and with a recirculation device (5b, 7, 22) arranged prior to the valve (5a, 6, 18) in the flow direction, which device is coupled to the handle (13) and which, following the closure of the valve, produces a recirculation of at least part of the medium which is located prior to the valve — considered in the direction of flow — in the pipeline, characterised in that the recirculation device includes a further pipe section (5b) of elastic material, the cross-section ($F_2$) of which is greater than the cross-section ($F_1$) corresponding to the nominal flow rate through the valve (5a, 6, 18), and further includes a pressure component (7, 22) associated with this further pipe section (5b), which component is coupled to the handle (13) and by means of which, when the handle (13) is actuated, the further pipe section (5b) is partially deformed, but only to the extent of the cross-section ($F_1$) corresponding to the nominal flow rate through the valve.

2. A dental spray handpiece as claimed in claim 1, characterised in that a common pipe (5) is provided for the valve (5a, 6, 18) and the recirculation device (5b, 7, 22).

3. A dental spray handpiece as claimed in claim 2, characterised in that the handle (13) is coupled to the spring loaded rocker (11) which on the one hand, when the handle is not depressed, compresses the pipe (5a) via a plunger (6, 18) of the valve so as to block the media flow, and on the other hand, when the handle is depressed, presses the pressure component (7, 22) onto the pipe so as to reduce the volume of the pipe section (5b), and in that rocker (11) and handle (13) are coupled on the one hand to the pressure component (7, 22) and on the other hand to the plunger (6, 18) is such a manner that when the handle (13) is not actuated the plunger (6, 18) compresses the pipe, with a longer stroke, to a dimension which is less than twice the wall thickness, in that within a first adjustment path this compression is reduced until a dimension is reached which corresponds to double the wall thickness, in that within this adjustment path the cross-section of the pipe section (5b) prior to the valve is reduced in size to the extent that the medium contained in this section is pressed towards the spray nozzle (2), and in that in the event of a further adjustment of the handle (13) the cross-section of this pipe section (5b) is further reduced in size, yet only to the cross-section ($F_{22}$) corresponding to the nominal flow rate.

4. A dental spray handpiece as claimed in claim 3, characterised in that the rocker (11) comprises a projection (11a) which incorporates the plunger (18).

5. A dental spray handpiece as claimed in one of the claims 1 to 4, characterised in that the pressure component (22) is coupled to the rocker (11) by means of an open ladle bearing (20, 21).

6. A dental spray handpiece as claimed in one of the claims 1 to 5, characterised in that the bearing of the rocker (11) is achieved by means of a toggle lever (24) which can be engaged in the valve body (16).

7. A dental spray handpiece as claimed in one of the claims 1 to 6, characterised in that two juxtaposed rockers (11) and a common toggle lever (24) are provided for the control of two media.

8. A dental spray handpiece as claimed in claim 7, characterised in that the pipes (5) for the two media (L, W) are each inserted and guided in a guide channel — defined by walls (15) — of the valve body (16).

9. A dental spray handpiece as claimed in one of the claims 1 to 8, characterised in that as a result of the shaping of corresponding surfaces (35, 36) of handle (13) and rocker (11), the rate of valve actuation changes along the adjustment path and is such that when the handle (13) is uniformly actuated the stroke of the plunger (6, 18) increases from a low to a higher value.

10. A dental spray handpiece as claimed in one of the claims 1 to 9, characterised in that, at its end which faces towards the spray nozzle (2), the common pipe (5) is directly connected to a heating cartridge (8).

11. A dental spray handpiece as claimed in claim 12, characterised in that the heating cartridge (8) contains connection and contacting elements (32, 33) for the direct connection of the supply and discharge of the media and for the electrical connection.

**Revendications**

1. Seringue à main de dentisterie comportant une soupape (5a, 6, 18), disposée dans une canalisation (3) pour le fluide, aboutissant à une buse de projection (2) et pouvant être actionnée à l'aide d'une manette (13) et servant à commander l'écoulement du fluide, laquelle soupape est formée essentiellement par un élément de tuyau (5a) constitué en un matériau élastique et par un piston de compression (6, 18) qui, lorsque la soupape est dans la position de repos, s'appuie contre l'élément de tuyau au moyen d'un levier basculant (11) et sous l'action d'un ou de plusieurs ressorts (12) et comprime cet élément de tuyau de telle sorte qu'un écoulement du fluide à travers cet élément de tuyau est interrompu au niveau de la zone de pincement, et qui, lors de l'actionnement de la manette (13), réduit le pincement du tuyau au moins au point qu'un écoulement circule, et comportant un dispositif d'aspiration en retour (5b, 7, 22), qui est accouplé à la manette (13), est disposé en amont de la soupape (5a, 18) suivant la direction d'écoulement et, après fermeture de la soupape, provoque une aspiration en retour d'au moins une partie du fluide qui est située dans la canalisation en amont de la soupape — suivant la direction d'écoulement —, caractérisée par le fait que le dispositif d'aspiration en retour comporte un autre élément de tuyau (5a) constitué en un matériau élastique et dont la section transversale ($F_2$) est supérieure à la section transversale ($F_1$), qui correspond au débit nominal au niveau de la soupape (5a, 6b), et un organe de compression (7, 22) associé à cet autre élément de tuyau (5b) et accouplé à la manette (13) et à l'aide duquel, lors de l'actionnement de la manette (13), l'autre élément de tuyau (5b) peut être déformé partiellement, mais seulement jusqu'à prendre la section transversale ($F_1$) correspondant au débit nominal au niveau de la soupape.

2. Seringue à main de dentisterie suivant la revendication 1, caractérisée par le fait qu'il est prévu un tuyau commun (5) pour la soupape (5a, 6, 18) et pour le dispositif d'aspiration en retour (5b, 7, 22).

3. Seringue à main de dentisterie suivant la revendication 2, caractérisée par le fait qu'à la manette (13) se trouve accouplé le levier basculant (11) sollicité par un ressort et qui d'une part, lorsque la manette n'est pas comprimée, comprime le tuyau (5a) par l'intermédiaire d'un piston de compression (6, 18) de la soupape, dans le sens d'un blocage de l'écoulement du fluide, et d'autre part, lorsque la manette est comprimée, repousse l'organe de compression (7, 22) sur le tuyau dans le sens d'une réduction du volume de l'élément de tuyau (5a), et que le levier basculant (11) et la manette (13) sont accouplés d'une part à l'organe de compression (7, 22) et d'autre part au piston de compression (6, 18) de telle sorte que, lorsque la manette (13) n'est pas actionnée, le piston de compression (6, 18) comprime le tuyau, avec un dépassement de course, à une épaisseur inférieure au double de l'épaisseur de la paroi, que cette compression du tuyau est réduite à une valeur correspondant au double de l'épaisseur de la paroi, au cours d'un premier trajet de déplacement, qu'au cours de ce trajet de déplacement la section transversale de l'élément de tuyau (5b) est réduite en amont de la soupape au point que le fluide situé dans cet élément de tuyau est refoulé en direction de la buse de projection (2), et que lors de la poursuite du déplacement de la manette (13), la section transversale de cet élément de tuyau (5b) est encore plus réduite, mais seulement jusqu'à prendre une section transversale ($F_{22}$) qui correspond au débit nominal.

4. Seringue à main de dentisterie suivant la revendication 3, caractérisée par le fait que le levier basculant (11) possède un appendice saillant (11a) contenant le piston de compression (18).

5. Seringue à main de dentisterie suivant l'une des revendications 1 à 4, caractérisée par le fait que l'organe de compression (22) est accouplé au levier basculant (11) au moyen d'un support en forme de coussinet ouvert (20, 21).

6. Seringue à main de dentisterie suivant l'une des revendications 1 à 5, caractérisée par le fait que le palier du levier basculant (11) est réalisé par l'intermédiaire d'un levier à genouillère (24) pouvant être encliqueté dans le corps (7) de la soupape.

7. Seringue à main de dentisterie suivant l'une des revendications 1 à 6, caractérisée par le fait que deux leviers basculants (11) disposés côte-à-côte et un levier à genouillère commun (24) sont prévus pour réaliser la commande de deux fluides.

8. Seringue à main de dentisterie suivant la revendication 7, caractérisée par le fait que les tuyaux (5) pour les deux fluides (L, W) sont insérés et guidés dans des canalisations respectives, limitées par des parois (15), du corps de soupape (16).

9. Seringue à main de dentisterie suivant l'une des revendications 1-8, caractérisée par le fait que la configuration de surfaces (35, 36), qui se correspondent réciproquement, de la manette (13) et du levier basculant (11) permet d'obtenir une transmission, qui varie sur la course de réglage, de l'actionnement de la soupape de telle sorte que, dans le cas d'un actionnement uniforme de la manette (13), la course du piston de compression (6, 18) augmente depuis une faible valeur jusqu'à une valeur plus élevée.

10. Seringue à main de dentisterie suivant l'une des revendications 1-9, caractérisée par le fait qu'au niveau de son extrémité tournée vers la buse de protection (2), le tuyau commun (5) est relié directement à une cartouche chauffante (8).

11. Seringue à main de dentisterie suivant la revendication 12, caractérisée par le fait que la cartouche chauffante (8) contient des organes (32, 33) de raccordement et d'établissement de contacts pour le raccordement direct des canalisations d'amenée et de départ du fluide et pour le raccordement électrique.

FIG 1

FIG 2

FIG 3

FIG 4

FIG 5

FIG 6